Europäisches Patentamt

European Patent Office

Office européen des brevets

(19)

(11) Numéro de publication: **0 021 912**

**B1**

(12)

# FASCICULE DE BREVET EUROPEEN

(45) Date de publication du fascicule du brevet: **12.09.84**

(51) Int. Cl.³: **G 21 C 3/32,** F 16 L 41/08

(21) Numéro de dépôt: **80400791.2**

(22) Date de dépôt: **03.06.80**

(54) **Procédé et dispositif de fixation d'un tube de guidage d'un assemblage combustible nucléaire aux plaques d'extrémités dudit assemblage.**

(30) Priorité: **14.06.79 FR 7915272**

(43) Date de publication de la demande:
**07.01.81 Bulletin 81/01**

(45) Mention de la délivrance du brevet:
**12.09.84 Bulletin 84/37**

(84) Etats contractants désignés:
**BE DE GB IT NL SE**

(56) Documents cités:
**DE-A-2 742 692**
**FR-A-1 450 315**
**FR-A-2 049 108**
**FR-A-2 070 194**
**FR-A-2 078 256**
**FR-A-2 078 392**
**FR-A-2 171 279**
**FR-A-2 368 785**
**FR-A-2 407 552**
**US-A-3 018 547**

(73) Titulaire: **COMMISSARIAT A L'ENERGIE
ATOMIQUE Etablissement de Caractère
Scientifique Technique et Industriel
B.P. 510
F-75752 Paris Cedex 15 (FR)**

(72) Inventeur: **Feutrel, Claude
105 Grande Rue
F-91430 Vauhallan (FR)**

(74) Mandataire: **Mongrédien, André et al
c/o BREVATOME 25, rue de Ponthieu
F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention se rapporte aux assemblages combustibles de réacteurs nucléaires par exemple du type refroidi par eau ordinaire sous-pression (PWR), dans lesquels le combustible proprement dit, réparti en un grand nombre de crayons unitaires, est groupé en des faisceaux autonomes constituant chacun un assemblage de combustible. Un tel assemblage comporte de façon connue et schématiquement deux plaques d'extrémité inférieure et supérieure réunies entre elles par des tubes guides creux pouvant servir notamment à l'introduction de barres de commande ou de dispositifs de mesure. Sur ces différents tubes guides sont fixées généralement des grilles d'espacement pouvant parfois coulisser librement autour desdits tubes guides et dans lesquelles sont fixés, à l'aide de systèmes à ressort, les crayons combustibles unitaires.

D'une manière courante également, les plaques d'extrémité sont en acier inoxydable et les tubes guides sont en alliage zircaloy perméable au flux de neutrons qui les traverse.

En raison de l'impossibilité pratique de souder le zircaloy sur l'acier inoxydable, on a réalisé jusqu'à ce jour les fixations des tubes guides sur les plaques d'extrémité en acier inoxydable à l'aide de systèmes d'emmanchement à force possédant des ondulations destinées à éviter le glissement longitudinal du tube dans son support (voir par exemple le FR—A—2 049 108). Toutefois, les dispositions de ce genre résistent très mal aux dilatations différentielles entre les différents éléments de la liaison lorsque le réacteur monte en température; ces dilatations amènent presque infailliblement des déformations, aussi bien diamètrales que longitudinales, qui finissent par compromettre la qualité de la liaison au bout d'un temps relativement court de fonctionnement.

On connaît également, — voir notamment les documents US—A—3 018 547 et FR—A—2 078 392 — des exemples de fixation de deux tubes en matériaux différents emboîtes l'un dans l'autre, mais cette fixation intervient à l'aide d'un ancrage réalisé par mandrinage d'une extrémité amincie de l'un des tubes dans l'autre tube, ce qui est l'équivalent des systèmes d'emmanchement à ondulations précédentes.

La présente invention a pour objet un procédé de fixation d'un tel tube de guidage sur la plaque d'extrémité d'un assemblage combustible nucléaire, qui permet d'assurer une jonction durable et solide à l'aide de moyens particulièrement simples et de mise en oeuvre facile.

Ce procédé se caractérisé essentiellement par la succession des étapes suivantes:

— on emboîte l'extrémité préalablement expansée du tube de guidage autour d'un manchon jusqu'à ce qu'elle vienne en butée contre un premier épaulement externe dudit manchon;

— on recouvre ladite extrémité d'une virole mise en place en force et enserrant le tube contre le manchon, puis on soude l'extrémité supérieure de ladite virole, au-dessus dudit premier épaulement externe, audit manchon;

— on introduit l'ensemble manchon, tube, virole dans l'un des orifices prévus à cet effet dans la plaque d'extrémité et comportant un épaulement, jusqu'à ce qu'un deuxième épaulement externe du manchon vienne en butée sur ledit épaulement de l'orifice de la plaque d'extrémité;

— on soude la partie supérieure du manchon à la partie supérieure de l'orifice de la plaque d'extrémité de l'assemblage.

Ainsi qu'on le voit, le procédé objet de l'invention réalise une liaison rigide du tube de guidage en zircaloy sur la plaque d'extrémité de l'assemblage en acier inox en évitant toute dilatation différentielle entre les éléments de la liaison tant au point de vue de la déformation diamétrale que de la déformation dans le sens longitudinal, du fait même que les différents composants de la liaison sont montés en butée les uns contre les autres et que des soudures assurent leur fixation définitive.

L'invention a également pour objet un dispositif de fixation d'un tube de guidage en zircaloy d'un assemblage combustible de réacteur nucléaire du type PWR à la plaque d'extrémité en acier dudit assemblage, ladite plaque d'extrémité étant percée d'un certain nombre d'orifices la traversant de part en part, caractérisé en ce qu'il comprend:

— un manchon muni de deux épaulements externes;

— une virole montée en force sur ledit manchon, soudée à celui-ci et enserrant l'extrémité expansée du tube de guidage emboîtée sur ledit manchon jusqu'au premier épaulement externe;

— dans l'un des orifices de la plaque d'extrémité un épaulement dans lequel est logé ledit manchon dont le deuxième épaulement vient en butée sur l'épaulement de la plaque d'extrémité, l'extrémité supérieure dudit manchon étant soudée à la partie supérieure de l'orifice de la plaque d'extrémité de l'assemblage.

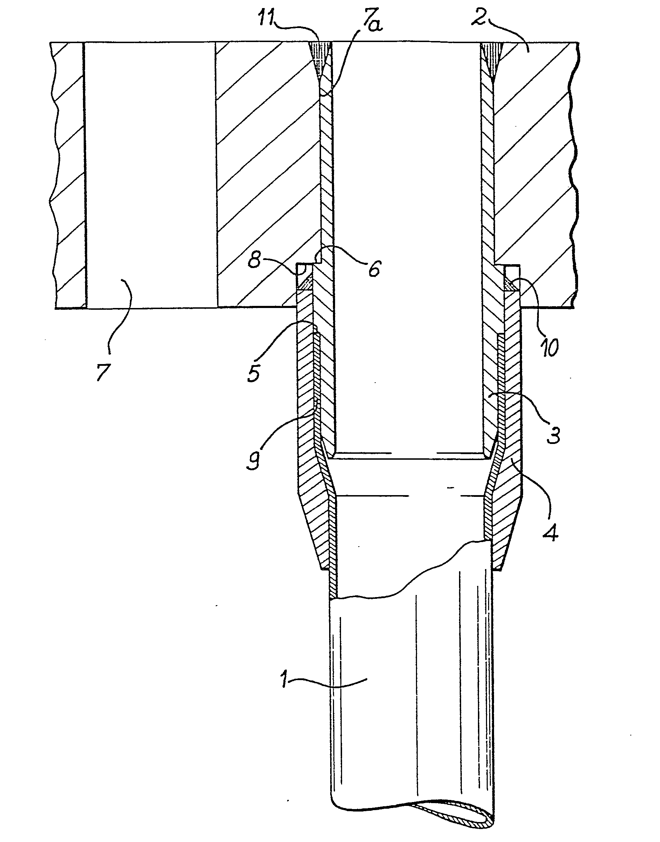

De toute façon, l'invention sera mieux comprise en se référant à la description qui suit d'un exemple de mise en oeuvre du procédé de fixation d'un tube de guidage d'un assemblage combustible sur la plaque d'extrémité de cet assemblage, description, qui sera faite en se référant à la figure unique ci-jointe.

Sur cette figure unique, on a représenté un tube de guidage 1 en zircaloy et la plaque d'extrémité 2 en acier inoxydable d'un assemblage combustible de réacteur nucléaire du type PWR. Conformément à l'invention, le tube de guidage 1 est serti à force entre un manchon 3 en acier inoxydable et une virole 4 également en acier inoxydable. Le manchon 3 comporte sur sa surface externe deux épaulements, l'un en position basse référencé 5, l'autre en position haute référencé 6. La plaque supérieure d'extrémité 2 comporte un certain nombre d'orifices 7 dont un en particulier, l'orifice 7a, la traversant de part en part et possédant à sa partie basse un épaulement 8.

Le procédé de fixation du tube de guidage 1 sur la plaque supérieure d'extrémité 2 comporte les étapes suivantes.

On commence d'abord par emboîter l'extrémité supérieure 9 expansée du tube 1 autour de la partie inférieure du manchon 3 jusqu'à ce que l'extrémité supérieure du tube 1 vienne en butée contre l'épaulement 5 dudit manchon 3. On vient ensuite recouvrir l'ensemble par la virole 4 en acier inoxydable de façon à sertir à force l'extrémité 9 du tube 1 entre le manchon 3 et la virole 4, cette opération de mise en place de la virole 4 étant faite par exemple à l'aide d'un pousseur à vis. La virole 4 est ainsi emmanchée sur le manchon 3 jusqu'au voisinage de son deuxième épaulement supérieur 6 et finalement soudée sur ledit manchon 3 par une soudure annulaire 10. A ce moment, le tube 1, le manchon 3 et la virole 4 forment un tout solidaire que l'on introduit dans l'orifice 7a de la plaque supérieure d'extrémité 2, jusqu'à ce que le deuxième épaulement externe 6 du manchon 3 vienne en butée contre l'épaulement 8 de l'orifice 7a de la plaque supérieure d'extrémité 2. Lorsque ceci est réalisé, l'extrémité supérieure du manchon 3 affleure à la surface de la plaque supérieure d'extrémité 2 et un cordon de soudure 11 de forme annulaire permet de fixer le manchon 3, c'est-à-dire en même temps le tube 1 et la virole 4 à la plaque supérieure 2 d'extrémité.

Il est facile de voir que le dispositif de liaison ainsi réalisé assure avec une fiabilité totale la fixation du tube 1 à la plaque 2 en s'opposant à toute déformation de ce dernier dans le sens longitudinal du fait des différents épaulements qui limitent les déplacements possibles et réciproques des pièces en présence et dans le sens diamétral par le fait que la virole 4 également fixée au manchon 3 recouvre totalement la partie supérieure expansée du tube de guidage 1.

**Revendications**

1. Procédé de fixation d'un tube de guidage (1) en zircaloy d'un assembage combustible de réacteur nucléaire à la plaque d'extrémité (2) en acier dudit assemblage, ladite plaque d'extrémité (2) étant percée d'un certain nombre d'orifices (7) la traversant de part en part, caractérisé par la succession des étapes suivantes:
— on emboîte l'extrémité préalablement expansée (9) du tube de guidage (1) autour d'un manchon (3) jusqu'à ce qu'elle vienne en butée contre un premier épaulement externe (5) dudit manchon (3);
— on recouvre ladite extrémité (9) d'une virole (4) mise en place en force et enserrant le tube (1) contre le manchon (3), puis on soude l'extrémité supérieure de ladite virole (4), au-dessus dudit premier épaulement externe (5), audit manchon (3);
— on introduit l'ensemble manchon (3), tube (9), virole (4) dans l'un des orifices (7a) prévus à cet effet dans la plaque d'extrémité (2) et comportant un épaulement (8), jusqu'à ce qu'un deuxième épaulement externe (6) du manchon vienne en butée sur ledit épaulement (8) de l'orifice (7) de la plaque d'extrémité (2);
— on soude la partie supérieure du mancon (3) à la partie supérieure de l'orifice (7a) de la plaque d'extrémité (2) de l'assemblage.

2. Dispositif de fixation d'un tube de guidage (1) en zircaloy d'un assemblage combustible de réacteur nucléaire du type PWR à la plaque d'extrémité (2) en acier dudit assemblage, ladite plaque d'extrémité (2) étant percée d'un certain nombre d'orifices (7) la traversant de part en part, caractérisé en ce qu'il comprend:
— un manchon (3) muni de deux épaulements externes (5, 6);
— une virole (4) montée en force sur ledit manchon (3), soudée à celui-ci et enserrant l'extrémité expansée (9) du tube de guidage emboîtée sur ledit manchon jusqu'au premier épaulement externe (5),
— dans l'un des orifices (7a) de la plaque d'extrémité (2) un épaulement (8) dans lequel est logé ledit manchon (3) dont le deuxième épaulement (6) vient en butée sur l'épaulement (8) de la plaque d'extrémité (2), l'extrémité supérieure dudit manchon (3) étant soudée à la partie supérieure de l'orifice (7a) de la plaque d'extrémité (2) de l'assemblage.

3. Dispositif selon la revendication 2, caractérisé en ce que la virole et le manchon sont en acier inoxydable.

**Patentansprüche**

1. Verfahren zur Befestigung eines Zicalloy-Führungsrohrs (1) eines Kernbrennelementbündels an der stählernen Endplatte dieses Bündels, bei welchem die Endplatte (2) von einer bestimmten Anzahl von sich von einer Seite zur anderen erstreckenden Öffnungen (7) durchsetzt ist, gekennzeichnet durch die Folge der nachstehenden Schritte:
— Aufschieben des zuvor aufgeweiteten Endes (9) des Führungsrohrs (1) auf eine Muffe (3) bis zum Anschlag an einer ersten äußeren Schalter (5) der Muffe (3),
— Einschließen des besagten Endes (9) in einer unter Kraftaufwand aufgesetzten und das Rohr (1) auf der Muffe (3) festklemmenden Manschette (4) und anschließendes Verschweißen des oberen Endes der Manschette (4) mit der Muffe (3) oberhalb der ersten äußeren Schulter (5),
— Einführen der aus der Muffe (3), dem Rohr (9) und der Manschette (5) gebildeten Anordnung in eine der zu diesem Zweck in der Endplatte (2) vorgesehenen Öffnungen (7a), welche mit einer Schulter (8) versehen ist, bis zum Anschlag einer zweiten äußeren Schulter (6) der Muffe (3) an der Schulter (8) der Öffnung (7) der Endplatte (2),

— Verschweißen des oberen Teils der Muffe (3) mit dem oberen Teil der Öffnung (7a) der Endplatte (2) des Bündels.

2. Vorrichtung zum Befestigen eines Zircalloy-Führungsrohrs (1) eines Kernbrennelementenbündels des Typs PWR an der stählernen Endplatte (2) des Bündels, wobei die Endplatte (2) von einer bestimmten Anzahl von sich von einer Seite zur anderen erstreckenden Öffnungen (7) durchsetzt ist, dadurch gekennzeichnet, daß sie

— eine mit zwei äußeren Schaltern (5, 6) versehene Muffe (3) aufweist.

— eine unter Kraftaufwand auf die Muffe (3) aufgebrachte Manschette (4), welche mit der Muffe verschweißt ist und und das bis zum Anschlag an der ersten äußeren Stufe (5) auf die Muffe aufgeschobene, aufgeweitete Ende (9) des Führungsrohrs festgeklemmt hält,

— eine in eine der Öffnungen (7a) der Endplatte (2), in welche die Muffe (3) eingeführt ist, gebildete Schulter (8), an welcher sich die zweite äußere Schulter (6) der Muffe (3) in Anlage befindet, wobei das obere Ende der Muffe (3) mit dem oberen Teil der Öffnung (7a) der Endplatte (2) des Bündels verschweißt ist.

3. Vorrichtung nach Anspruch 2, dadurch gekennzeichnet, daß die Manschette und die Muffe aus rostfreiem Stahl sind.

**Claims**

1. Process for fixing a zircalloy guide tube (1) of a fuel assembly of a nuclear reactor to the steel end plate (2) of said assembly, said end plate having a predetermined number of bores (7) extending through it from side to side, characterized in that the following steps are carried out in succession:—

— the previously-expanded end (9) of the guide tube (1) is pushed over a sleeve (3) until it abuts on a first external shoulder (5) of said tube (3);

— a thimble (4) is forced over said end (9) urging the tube (1) against the sleeve (3), and the upper end of said thimble (4) is welded to said sleeve (3) above said first external shoulder (5);

— the assembly of sleeve (3), tube (9) and thimble (4) is introduced into one of the bores (7a) provided for this purpose in the end plate (2), and having a shoulder (8), until a second external shoulder (6) of the sleeve abuts on said shoulder (8) of the bore (7) of the end plate (2); and

— the upper part of the sleeve (3) is welded to the upper part of the bore (7a) of the end plate (2) of the assembly.

2. Fixing device for a zircalloy guide tube (1) of a fuel assembly for a nuclear reactor of the PWR type to the steel end plate (2) of said assembly, said end plate (2) having a predetermined number of bores (7) extending through it from side to side, characterized in that it comprises:

— a sleeve (3) having two external shoulders (5, 6);

— a thimble (4) forced over said sleeve (3), welded thereto and surrounding the expanded end (9) of the guide tube embedded within said sleeve up to the first external shoulder (5); and

— in one of the bores (7a) of the end plate (2), a shoulder (8) in which is lodged said sleeve (3) whose second shoulder (6) abuts on the shoulder (8) of the end plate (2), the upper end of said sleeve (3) being welded to the upper part of the bore (7a) in the end plate (2) of the assembly.

3. Device according to claim 2, characterized in that the thimble and the sleeve are made from stainless steel.

0 021 912

1